# EUROPÄISCHE PATENTANMELDUNG

(11) **EP 3 672 163 A1**
(43) Veröffentlichungstag der Anmeldung: **24.06.2020**
(21) Anmeldenummer: 18214338.8
(22) Anmeldetag: 20.12.2018
(51) Int. Cl.: H04L 12/54, H04L 12/24

(54) **VERFAHREN ZUR DATENKOMMUNIKATION, KOMMUNIKATIONSGERÄT, COMPUTERPROGRAMM UND COMPUTERLESBARES MEDIUM**

(71) Anmelder: Siemens Aktiengesellschaft, 80333 München (DE)
(72) Erfinder: Chen, Feng, 90537 Feucht (DE); Götz, Franz-Josef, 91180 Heideck (DE); Kießling, Marcel, 91235 Velden (DE); Nguyen, An Ninh, 90427 Nürnberg (DE); Schmitt, Jürgen, 90766 Fürth (DE)

(57) **Zusammenfassung**

Die Erfindung betrifft ein Verfahren zur Datenkommunikation in einem mehrere Netzwerkknoten (2) umfassenden insbesondere industriellen Netzwerk (1), an dem wenigstens ein Endgerät (4) teilnimmt, welches wenigstens zwei Netzwerkports (P1-P3) aufweist, die an verschiedenen Stellen des Netzwerkes (1) angeschlossen sind, und wobei von dem wenigstens einen Endgerät (4) insbesondere für eine Anwendung (5) und/oder im Rahmen einer Anwendung (5) Daten an wenigstens ein vorgegebenes Ziel zu senden sind, dadurch gekennzeichnet, dass
- Informationen über die Topologie des Netzwerkes (1), insbesondere über in dem Netzwerk (1) verfügbare Pfade bereitgestellt werden (S1),
- auf Basis der Topologie-Informationen insbesondere von dem wenigstens einen Endgerät (4) und/oder von der Anwendung (5) eine Entscheidung getroffen wird, über welchen Netzwerkport (P1-P3) des Endgerätes (4) die Daten an das vorgegebene Ziel zu senden sind S2), und
- die Daten über den ausgewählten Netzwerkport (P1-P3) des Endgerätes (4) gesendet werden (S4).

Darüber hinaus betrifft die Erfindung ein Kommunikationsgerät (4), ein Computerprogramm und ein computerlesbares Medium.

## Beschreibung

Die Erfindung betrifft ein Verfahren zur Datenkommunikation in einem mehrere Netzwerkknoten umfassenden insbesondere industriellen Netzwerk, an dem wenigstens ein Endgerät teilnimmt, welches wenigstens zwei Netzwerkports aufweist, die an verschiedenen Stellen des Netzwerkes angeschlossen sind, und wobei von dem wenigstens einen Endgerät insbesondere für eine Anwendung und/oder im Rahmen einer Anwendung Daten an wenigstens ein vorgegebenes Ziel zu senden sind. Darüber hinaus betrifft die Erfindung ein Kommunikationsgerät, ein Computerprogramm und ein computerlesbares Medium.

Die IEEE802.1 TSN Arbeitsgruppe definiert Erweiterungen zum Ethernet Standard IEEE802.1/.3 für zeitsensitive Netzwerke (Time Sensitive Networking, TSN). Basierend auf der vorangegangenen Arbeit der Audio Video Bridging (AVB) Arbeitsgruppe, ist die Quality of Service (QoS) für Echtzeitflüsse (die in IEEE802 "Stream" genannt werden) weiter verbessert worden, was eine garantierte Latenz angeht. Zu den Erweiterungen gehören beispielsweise Zeitsynchronisation (IEEE 802.1AS-Rev), Frame Preemption (IEEE 802.1Qbu) und Reservierung (IEEE 802.1Qca, IEEE 802.1Qcc) sowie weitere.

Bei AVB und TSN wird streng zwischen einem Endgerät mit einem Netzwerkanschluss (auch als Netzwerkport oder kurz Port bezeichnet) und einer Netzwerkkomponente, beispielsweise einem Switch oder einer Bridge, mit mehreren Netzwerkports unterschieden. Für einen Stream kann ein Endgerät einen Sender (üblicherweise als Talker bezeichnet) oder Empfänger (üblicherweise als Listener bezeichnet) darstellen. Im Netzwerk selbst, insbesondere an den beteiligten Netzwerkknoten, etwa Bridges und/oder Switches, wird dann die Weiterleitungsentscheidung für Streamdaten getroffen und eine gesicherte Übertragung der Streamdaten zwischen den Endgeräten gewährleistet. Für die Einrichtungen dieser Verbindungen ist in der IEEE 802.1 Q das Stream Reservation Protocol (SRP) definiert. Endgeräte (Talker und Listener) melden sich dabei jeweils am Netzwerk an.

In der Praxis gibt es oft Geräte mit mehreren Netzwerkports. Dabei wird nach Kenntnisstand der Anmelderin auch bei Vorhandensein mehrerer Netzwerkports an einem Endgerät immer nur ein Port genutzt, unabhängig davon, ob dieser für die konkrete Datenübertragung besonders geeignet ist, insbesondere, was den genutzten Pfad angeht. Ein anderer Port wird allenfalls verwendet, wenn ein Ausfall bzw. Fehler des bisher genutzten Ports vorliegt.

In AVB beziehungsweise TSN werden Endgeräte mit mehr als einem Port nach Kenntnisstand der Anmelderin bisher nicht betrachtet. Gemäß dem Modell der IEEE wird ein Gerät mit mehr als einem Port nicht mehr als reines Endgerät betrachtet, sondern als eine Kombination eines Switches mit einem daran angeschlossenem Endgerät angesehen.

Es ist eine Aufgabe der vorliegenden Erfindung, eine Möglichkeit für eine besonders effiziente Kommunikation in einem Netzwerk zu schaffen, an dem eines oder mehrere Endgeräte mit mehr als einem Netzwerkport teilnehmen.

Diese Aufgabe wird bei einem Verfahren der eingangs genannten Art dadurch gelöst, dass
- Informationen über die Topologie des Netzwerkes, insbesondere über in dem Netzwerk verfügbare Pfade bereitgestellt werden,
- auf Basis der Topologie-Informationen insbesondere von dem wenigstens einen Endgerät und/oder von der Anwendung eine Entscheidung getroffen wird, über welchen Port des Endgerätes die Daten an das vorgegebene Ziel zu senden sind, und
- die Daten über den ausgewählten Port des Endgerätes gesendet werden.

Die Aufgabe wird darüber hinaus gelöst durch ein Kommunikationsgerät zur Durchführung des erfindungsgemäßen Verfahrens, welches wenigstens zwei Netzwerkports aufweist.

Das erfindungsgemäße Kommunikationsgerät ist bevorzugt ausgebildet und/oder eingerichtet,
- um Informationen über die Topologie eines Netzwerkes, an dem das Gerät teilnimmt, zu empfangen, insbesondere über in dem Netzwerk verfügbare Pfade,
- um auf Basis der Topologie-Informationen eine Entscheidung zu treffen, welchen der wenigstens zwei Netzwerkports es verwendet, um Daten an ein vorgegebenes Ziel zu senden, und
- um Daten über den ausgewählten Netzwerkport zu senden.

Die Entscheidung, welcher Port zu verwenden ist, kann beispielsweise von einer auf dem erfindungsgemäßen Gerät laufenden Anwendung getroffen werden, von der bzw. im Rahmen derer die Daten zu senden sind.

Der Grundgedanke der vorliegenden Erfindung basiert mit anderen Worten darauf, in dem Fall, dass ein Endgerät mehr als einen Netzwerkanschluss/Netzwerkport aufweist, über die es an einem Netzwerk teilnimmt, Topologie-Informationen über das Netzwerk heranzuziehen und auf Basis dieser bevorzugt automatisch eine Entscheidung zu treffen, welcher von den mehreren im Netzwerk liegenden Ports für das Senden von Daten, insbesondere Datenpaketen bzw. Datenframes an ein vorgegebenes Ziel zu verwenden ist. Dies macht es möglich, flexibel jeweils einen besonders geeigneten, beispielsweise kürzesten Pfad zu einem vorgegebenen Ziel für eine Datenübertagung zu wählen und zu nutzen, wodurch im Ergebnis eine besonders reibungsfreie Datenkommunikation in einem Netzwerk gewährleistet und eine hohe Effizienz erzielt werden kann.

Die Topologie-Informationen werden bevorzugt dem wenigstens einen Endgerät und/oder wenigstens einer auf diesem laufenden Anwendung bereitgestellt bzw. an das wenigstens eine Endgerät und/oder an wenigstens eine Anwendung übermittelt. So wird es möglich, dass ein Endgerät mit mehreren Ports, bzw. eine Anwendung auf einem solchen, einen geeigneten Pfad, insbesondere den kürzesten Weg im Netzwerk zum Ziel selbst lokal anhand dieser bevorzugt automatisch bestimmen kann und für jede Übertragung, insbesondere für jeden Stream, den Sendeport (auch als Sendeinterface bezeichnet) selbst optimiert auswählen kann. Da eine Pfadberechnung durch das Endgerät selber möglich ist, kann lokal ein besonders geeigneter, insbesondere der ideale Port gewählt und verwendet werden.

Hat ein Endgerät beispielsweise zwei Ports, die an verschiedenen Stellen im Netzwerk liegen bzw. angeschlossen sind, beispielsweise mit zwei verschiedenen Netzwerkknoten verbunden sind, kann unter Berücksichtigung von Topologie-Informationen über das Netzwerk insbesondere ermittelt werden, von welchem der beiden Ports einer oder auch mehrere besonders geeignete, insbesondere kürzeste Pfade abgehen.

Besonders bevorzugt wird für jede Verbindung zwischen zwei Endgeräten von der Anwendung, welche die Daten sendet bzw. senden möchte bzw. senden wird, vor dem eigentlichen Senden der Daten ein geeigneter, optimaler Port auf die erfindungsgemäße Weise gewählt. Als Verbindung kann gemäß IEEE 802.1 Q TSN auch ein Stream von einem Endgerät als Talker zu einem oder mehreren Endgeräten als Listener angesehen werden. Ein Endgerät kann für unterschiedliche Streams Listener oder Talker darstellen.

Sind für mehrere und/oder im Rahmen von mehreren Anwendungen Daten von einem Endgerät zu übertragen, wird bevorzugt für jede Anwendung und die oder jede zugehörige Datenübertragung zwischen dem Endgerät und dem oder dem jeweiligen vorgegebenen Ziel auf Basis bereitgestellter Topologie-Informationen ein Port ausgewählt und für die oder die jeweilige Datenübertragung verwendet.

Dass die zwei oder mehr Ports des wenigstens einen Endgerätes an verschiedenen Stellen des Netzwerkes angeschlossen sind, bedeutet insbesondere, dass über die zwei oder mehr Porst verschiedene Netzwerkpfade erreichbar sind bzw. genutzt werden können. Es kann alternativ oder zusätzlich bedeuten, dass die zwei oder mehr Ports des wenigstens einen Endgerätes mit verschiedenen Netzwerkknoten und/oder ggf. vorhandenen weiteren Endgeräten verbunden sind. Beispielsweise kann ein Port mit einem Netzwerkknoten und ein weiterer Port mit einem anderen Netzwerkknoten verbunden sein, oder ein Port mit einem Netzwerkknoten und ein weiterer Port mit einem ggf. vorhandenen anderen Endgerät. Weist das wenigstens einen Endgerät mehr als zwei Ports auf, können diese beispielsweise jeweils mit einem anderen Netzwerkknoten oder ggf. vorhandenen anderen Endgerät verbunden sein.

Die Topologie-Informationen, die erfindungsgemäß bereitgestellt werden, umfassen bevorzugt die Information über insbesondere sämtliche von dem wenigstens einen Endgerät abgehenden Pfade oder sind derart, dass insbesondere sämtliche von dem wenigstens einen Endgerät abgehenden Pfade auf Basis dieser ermittelt, insbesondere berechnet werden können. Die Topologie-Informationen können Nachbarschaftsbeziehungen von Netzwerkknote und/oder Endgeräten umfassen.

Bei dem vorgegebenen Ziel kann es sich beispielsweise um ein weiteres Endgerät handeln, welches bevorzugt eine Datensenke für Daten darstellt, die das Endgerät senden möchte. Insbesondere im Falle eines industriellen Netzwerkes kann das wenigstens eine Endgerät mit zwei oder mehr Netzwerkports beispielsweise eine bevorzugt speicherprogrammierbare Steuerung sein, welche Daten beispielsweise an einen Aktor oder einen IO-Gerät als Ziel übermitteln möchte.

Unter einem Endgerät ist insbesondere in an sich bekannter Weise ein Gerät zu verstehen, das in einem Netzwerk eine initiale Quelle und/oder ein finales Ziel von Daten, insbesondere Datenframes darstellet, die in dem Netzwerk übertragen werden bzw. zu übertragen sind. Es handelt sich bevorzugt um Endgeräte (end stations) im Sinne von IEEE802.1Q und/oder ISO/IEC 10589:2002(E).

Bei dem erfindungsgemäßen Gerät handelt es sich bevorzugt um ein Endgerät insbesondere in diesem Sinne. Ein solches kann beispielsweise durch eine bevorzugt speicherprogrammierbare Steuerung oder ein IO-Gerät, einen Aktor, Sensor, ein Kombigerät bzw. Gerät zum Anschluss von Aktoren und/oder Sensoren, ein HMI-Panel oder dergleichen gegeben sein.

Es versteht sich, dass für den Fall, dass mehrere Endgeräte mit mehr als einem Port an einem Netzwerk teilnehmen, bevorzugt jedem Endgerät erfindungsgemäß Topologie-Informationen bereitgestellt werden und jedes Endgerät unter Berücksichtigung bzw. auf Basis dieser vor dem Senden von Daten an ein gegebenes Ziel (jeweils) einen geeigneten Port als Sendeport auswählt.

In besonders bevorzugter Ausgestaltung des Verfahrens sendet wenigstens einer, bevorzugt jeder Netzwerkknoten Topologie-Nachrichten aus, die Informationen zumindest über seine jeweils direkt benachbarten Netzwerkeilnehmer umfassen. Die Topologie-Nachrichten werden bevorzugt über ein bzw. im Rahmen eines Protokolls versendet, was sich als besonders zweckmäßig erwiesen hat. Werden Topologie-Nachrichten von wenigstens einem bzw. allen Netzwerkknoten ausgesendet, werden diese weiterhin bevorzugt zur Bereitstellung der Topologie-Informationen oder zumindest als Teil der Topologie-Informationen herangezogen.

Bei benachbarten Netzwerkteilnehmern kann es sich beispielsweise um benachbarte Netzwerkknoten und/oder benachbarte Endgeräte handeln.

In weiterer besonders vorteilhafter Ausführung kann vorgesehen sein, dass das wenigstens eine Endgerät von wenigstens einem Netzwerkknoten gesendete Topologie-Nachrichten empfängt, und auf Basis der empfangenen Topologie-Nachrichten die Entscheidung trifft, welcher Port für das Senden der Daten an das vorgegebene Ziel verwendet wird. Es hat sich als besonders geeignet erwiesen, wenn das wenigstens eine Endgerät Informationen über die Netzwerktopologie, insbesondere in dem Netzwerk verfügbare Pfade von einem oder auch mehreren Netzwerkknoten erhält. Wenn an einem Netzwerk beteiligte Geräte bzw. Komponenten untereinander Informationen über die Netzwerktopologie austauschen, kann hierzu insbesondere auf eine zentrale Stelle bzw. Einheit verzichtet werden. Unter Berücksichtigung der insbesondere gemäß einem solchen dezentralen Ansatz erhaltenen Informationen kann ein Endgerät mit mehreren Ports insbesondere denjenigen Port ermitteln, über den ein besonders geeigneter, etwa der kürzeste Pfad zu einem vorgegebenen Ziel der Datenübertragung nutzbar ist, und es kann die Entscheidung treffen, diesen Port als Sendeport für die Datenübertragung zu dem vorgegebenen Ziel zu nutzen.

Weiterhin kann vorgesehen sein, dass sich das wenigstens eine Endgerät gegenüber wenigstens einem Netzwerkknoten als Netzwerknoten ausgibt. Das erfindungsgemäße Gerät ist entsprechend bevorzugt ausgebildet und/oder eingerichtet, um sich in einem Netzwerk, an dem das Gerät teilnimmt, als Netzwerkknoten auszugeben.

Dies kann gewährleisten, dass das Endgerät in Abweichung zum Stand der Technik Topologie-Informationen erhält, die an sich nur für Netzwerkknoten vorgesehen sind bzw. an sich nur zwischen Netzwerkknoten insbesondere gemäß einem oder über ein Routing-Protokoll ausgetauscht werden.

Das wenigstens eine Endgerät kann ferner insbesondere an einen oder mehrere bevorzugt benachbarten Netzwerkknoten wenigstens eine Nachricht, insbesondere Topologie-Nachricht senden, die bevorzugt Informationen zumindest über seine jeweils direkt benachbarten Netzwerkeilnehmer, insbesondere Netzwerkknoten und/oder Endgeräte umfasst.

Auch kann vorgesehen sein, dass das wenigstens eine Endgerät insbesondere einem oder mehreren bevorzugt benachbarten Netzwerkknoten mitteilt, dass es sich in einem überlasteten Zustand befindet, in dem bevorzugt von dem wenigstens einen Endgerät empfangene und weiterzuleitende Daten nur noch an gegebenenfalls vorhandene benachbarte Endgeräte jedoch nicht an gegebenenfalls vorhandenen benachbarte Netzwerkknoten weitergeleitet werden können. Das erfindungsgemäße Gerät kann entsprechend bevorzugt ausgebildet und/oder eingerichtet sein, um Nachrichten, insbesondere Topologie-Nachrichten auszusenden, mit denen mitgeteilt wird, dass sich das Gerät in einem überlasteten Zustand befindet, in dem bevorzugt von ihm empfangene und weiterzuleitende Daten nur noch an gegebenenfalls vorhandene benachbarte Endgeräte jedoch nicht an gegebenenfalls vorhandenen benachbarte Netzwerkknoten weitergeleitet werden können.

Beispielsweise kann in der von dem wenigstens einen Endgerät gesendeten wenigstens einen Nachricht das Bestehen eines Überlastungszustandes angezeigt werden, bevorzugt über ein an entsprechender Stelle gesetztes Bit. Das erfindungsgemäße Gerät kann entsprechend ausgebildet und/oder eingerichtet sein.

Dies stellt eine besonders einfache Möglichkeit dar, einen Überlastungszustand anzuzeigen bzw., insbesondere "vorzutäuschen". So kann das wenigstens eine Endgerät dem Netzwerk gegenüber anzeigen, dass es nicht zur Weiterleitung von "Durchgangsverkehr" bereitsteht, wodurch ein hohes weiterzuleitendes Datenaufkommen verhindert werden kann. Das Endgerät übernimmt dann insbesondere keine Netzwerkknoten-Funktion, etwa nicht die Funktion einer Bridge.

Insbesondere wird verhindert, dass durch das Endgerät neue Routen berechnet und/oder verteilt, insbesondere anderen Teilnehmern mitgeteilt werden, und/oder von dem Netzwerk interne Weiterleitungen über die Ports des Endgerätes erwartet werden.

Es werden insbesondere aus dem Grunde keinen neuen Routen durch ein Gerät berechnet und verteilt, welches einen Überlastungszustand angezeigt hat, da eine schleifenfreie Topologie nicht mehr gewährleistet und die Funktion der neuen Routen nicht sichergestellt wäre.

Weiterhin kann vorgesehen sein, dass insbesondere von benachbarten Netzwerkknoten, etwa Bridges, nur noch Wege zu ggf. vorhandenen, mit dem Endgerät (direkt) verbundenen weiteren Endgeräten eingerichtet werden, da die Weiterleitung an lokale Endgeräte immer schleifenfrei ist.

Gibt ein Endgerät, etwa durch Senden einer oder mehrerer geeigneter Nachrichten, einerseits zu erkennen, dass es einen Netzwerkknoten darstellt, "täuscht" dem Netzwerk gegenüber also praktisch vor, ein solcher zu sein, und kommuniziert gleichzeitig bzw. "täuscht" gleichzeitig vor, dass es sich in einem Überlastungszustand befindet, wird es möglich, Topologie-Informationen von Netzwerkknoten zu erhalten, um optimale Pfade zu wählen, ohne den Nachteil in Kauf nehmen zu müssen, die gleiche "Weiterleitungslast" wie diese zu tragen. Diese erfindungsgemäße Ausführungsform stellt somit einen idealen und leicht umsetzbaren "Trick" dar, um auf besonders einfache Weise an den Netzwerkknoten eines Netzwerkes ggf. ohnehin zur Verfügung stehende Topologie-Informationen zu gelangen, ohne den Nachteil in Kauf nehmen zu müssen, durch weiterzuleitenden Datenverkehr übermäßig ausgelastet zu werden.

Mit Letzterem wird insbesondere dem Umstand Rechnung getragen, dass eine Weiterleitung zwischen den unterschiedlichen Netzwerkports eines Endgerätes in der Regel nicht performant realisierbar ist, da die Weiteleitung in Software erfolgen muss und keine Unterstützung der Hardware vorhanden ist, wie bei zur Weiterleitung vorgesehenen und ausgebildeten Netzwerkknoten. Dies gilt vor allem für einfache Endgeräte, wie sie insbesondere in industriellen Netzwerken bevorzugt ausgebildet sind, etwa Aktoren und/oder Sensoren. Die Hauptaufgabe solcher einfachen Endgeräte ist nicht die Kommunikation, also die Weitergabe von Informationen im Netzwerk, sondern die Erzeugung von Daten und Weitergabe bzw. die Reaktion auf erhaltene Daten.

Da mit einer Weiterleitung nur an direkt angeschlossene weitere Endgeräte in der Regel kein besonders hohes Datenaufkommen verbunden ist, kann dies in der Regel in Kauf genommen werden, selbst wenn eine Weiterleitung zwischen den mehreren Ports eines Endgerätes über Software erfolgt.

Als besonders geeignet hat es sich erwiesen, wenn von den Netzwerkknoten und/oder dem wenigstens einen Endgerät Topologie-Nachrichten gemäß einem Routing-Protokoll, insbesondere gemäß dem IS-IS-Protokoll gesendet und/oder empfangen werden.

Entsprechend kann das erfindungsgemäße Gerät ausgebildet und/oder eingerichtet sein, um Nachrichten gemäß einem Routing-Protokoll, insbesondere gemäß dem IS-IS-Protokoll zu senden und/oder zu empfangen.

Bei dem IS-IS-Protokoll handelt es sich insbesondere um das "Intermediate System to Intermediate System Protocol" bevorzugt gemäß ISO/IEC 10589:2002(E). Dieses stellt ein besonders geeignetes Protokoll insbesondere zum Erstellen bzw. Erhalt von Topologie-Informationen dar. Im Rahmen dieses ist insbesondere vorgesehen, dass die Netzwerkknoten Informationen jeweils zumindest über ihre direkten Nachbarn aussenden und jeder Netzwerkknoten auf Basis der von anderen Knoten empfangenen Nachrichten und den Informationen über seine Nachbarn ein "Wissen über die Topologie" erhält, beispielsweise eine Datenbank oder Liste mit Topologie-Informationen, insbesondere Pfadinformationen aufbaut.

Weitere Routing-Protokolle können ebenfalls zum Einsatz kommen. Rein beispielhaft sei als weiteres Routing-Protokoll, welches ebenfalls im Rahmen der vorliegenden Erfindung verwendet werden kann, OSPF (Open Shortest Path First genannt (zu OSPF siehe beispielsweise den Request for Comments RFC 2328, https://tools.ietf.org/html/rfc2328).

Gemäß dem Stand der Technik sind "intermediate stations" (IS) an dem Topologie-Informations-Austausch beteiligt, nicht jedoch Endgeräte ("end stations" (ES)).

In bevorzugter Ausführungsform des erfindungsgemäßen Verfahrens nimmt das wenigstens eine Endgerät mit den mehreren Ports trotz seines Status als "end station" (ES) wie ein Netzwerkknoten, also wie eine "intermediate station" (IS) an dem bisher den Netzwerkknoten vorbehaltenen Topologie-Informationsaustausch teil, wobei bevorzugt durch das "Vortäuschen" des Überlastungszustandes verhindert wird, dass das Endgerät auch hinsichtlich der Datenweiterleitung wie eine "intermediate station" (IS) behandelt wird.

Das "Vortäuschen" der Netzwerkknoten-Stellung wird bevorzugt erzielt, indem von dem wenigstens einen Endgerät wenigstens eine Nachricht, insbesondere Topologie-Nachricht gesendet wird, die gemäß dem (Routing-)Protokoll von Netzwerkknoten zu senden ist. Von dem wenigstens einen Endgerät mit den mehreren Ports wird bevorzugt wenigstens eine gemäß einem Routing-Protokoll vorgesehene Anmelde-Nachricht an wenigstens einen Netzwerkknoten gesendet.

Als besonders geeignet hat sich das erfindungsgemäße Verfahren erwiesen, wenn wenigstens einer der mehreren Ports des wenigstens einen Endgerätes für die insbesondere zyklische Übertragung von Streamdaten zu verwenden ist.

Entsprechend kann weiterhin vorgesehen sein, dass für die von dem wenigstens einen Endgerät an das wenigstens eine vorgegebene Ziel zu sendenden Daten an beteiligten Netzwerkknoten zwischen dem wenigstens einen Endgerät und dem wenigstens einen vorgegebenen Ziel Netzwerkressourcen reserviert und die Daten unter Nutzung der reservierten Netzwerkressourcen als Stream, insbesondere zyklisch und/oder gemäß IEEE 802.1Q weitergeleitet werden. Die Etablierung von Streams zur gesicherten Übermittlung insbesondere von Echtzeit-relevanten Daten ist aus dem Stand der Technik hinlänglich vorbekannt, insbesondere aus den diversen Standards der AVB- und TSN Task Group. Bevorzugt wird im Anschluss an die Auswahl eines Ports auf die erfindungsgemäße Weise wenigstens ein von dem gewählten Port abgehender Stream gemäß dem Stand der Technik etabliert.

Besonders bevorzugt ist vorgesehen, dass über den ausgewählten Port wenigstens eine Stream-Bekanntgabe-Nachricht, beispielswiese ein sogenannter Talker Advertise gesendet wird, in Reaktion auf die sich einer oder mehrere Stream-Teilnehmer an dem Stream anmelden können und an den oder die nach der erfolgreichen Reservierung von Ressourcen an den beteiligten Netzwerkknoten Stream-Daten, insbesondere Stream-Datenframes von dem wenigstens einen Endgerät über den ausgewählten Port an den oder die Stream-Teilnehmer gesendet werden können.

Das Netzwerk ist zweckmäßiger Weise Ethernet-fähig, es handelt sich insbesondere um ein Ethernet-basiertes Netzwerk. Insbesondere, damit Streams mit garantierter Dienstgüte (englisch: Quality of Service, QoS) unterstützt werden, ist das Netzwerk bzw. sind insbesondere zumindest die beteiligten Netzwerkknoten bevorzugt AVB- bzw. TSN-fähig, unterstützt bzw. unterstützen insbesondere die Einrichtung geschützter Verbindungen mit reservierten Netzwerkressourcen an den beteiligten Netzwerkknoten. Dies ist aus dem Stand der Technik hinlänglich vorbekannt. Für die Einrichtung bzw. Etablierung von Streams kommt bevorzugt ein Reservierungsprotokoll, beispielsweise SRP und/oder MSRP insbesondere gemäß IEEE 802.1 Q zum Einsatz.

Das erfindungsgemäße Gerät ist bevorzugt AVB- oder TSN-fähig, unterstützt bevorzugt die Einrichtung von Streams, insbesondere unter Verwendung eines Reservierungsprotokolls.

Ein weiterer Gegenstand der vorliegenden Erfindung ist ein Computerprogramm, das Programmcodemittel zur Durchführung der Schritte des erfindungsgemäßen Verfahrens umfasst.

Schließlich ist Gegenstand der Erfindung ein computerlesbares Medium, das Instruktionen umfasst, die, wenn sie auf wenigstens einem Computer ausgeführt werden, den wenigstens einen Computer veranlassen, die Schritte des erfindungsgemäßen Verfahrens durchzuführen.

Bei dem computerlesbaren Medium kann es sich beispielsweise um eine CD-ROM oder DVD oder einen USB oder Flash Speicher handeln. Es sei angemerkt, dass unter einem computerlesbaren Medium nicht ausschließlich ein körperliches Medium zu verstehen sein soll, sondern ein solches beispielswiese auch in Form eines Datenstromes und/oder eines Signals, welches einen Datenstrom repräsentiert, vorliegen kann.

Weitere Merkmale und Vorteile der vorliegenden Erfindung werden anhand der nachfolgenden Beschreibung erfindungsgemäßer Ausführungsformen unter Bezugnahme auf die beiliegende Zeichnung deutlich. Darin ist
- FIG 1: eine rein schematische Darstellung eines industriellen TSN-Netzwerkes, wobei ein Endgerät mit mehreren Netzwerkports nicht betrachtet ist;
- FIG 2: eine rein schematische Darstellung eines Endgerätes mit zwei Netzwerkports und einer internen Bridge;
- FIG 3: eine rein schematische Darstellung eines Endgerätes mit zwei Netzwerkports, welches für das Netzwerk wie zwei Endgeräte aussieht;
- FIG 4: eine rein schematische Teildarstellung des industriellen Netzwerkes gemäß FIG 1, an dem ein Endgerät mit mehreren Netzwerkports teilnimmt; und
- FIG 5: ein Blockdiagramm mit den Schritten eines Ausführungsbeispiels des erfindungsgemäßen Verfahrens.

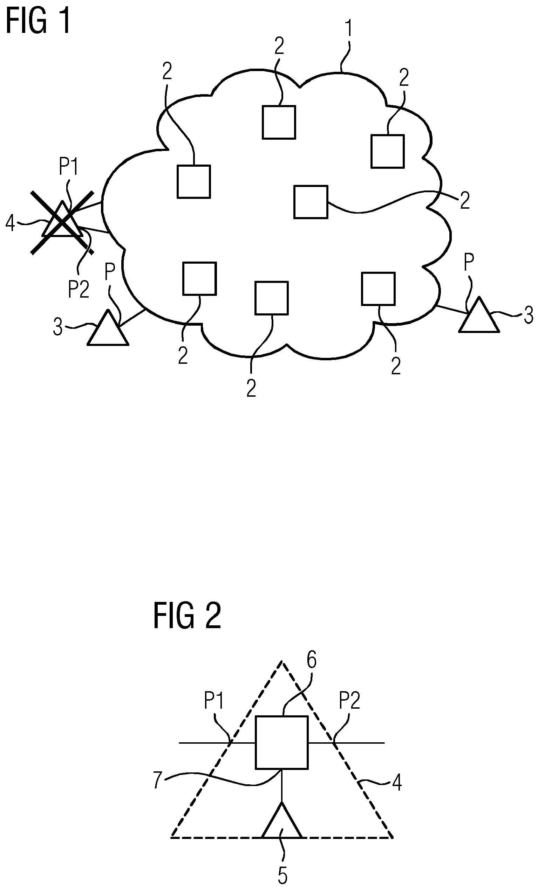

Die FIG 1 zeigt rein schematisch ein industrielles Netzwerk 1, welches vereinfacht als Wolke dargestellt ist. Das Netzwerk 1 umfasst mehreren Netzwerkknoten 2 in Form von Bridges, von denen in der FIG 1 beispielhaft sieben Stück dargestellt sind. Es versteht sich, dass das Netzwerk 1 weitere Bridges 2 umfassen kann oder umfasst, die in der Figur nicht erkennbar sind.

Die Netzwerkknoten 2 sind TSN-fähig, unterstützen insbesondere die Einrichtung geschützter Verbindungen mit reservierten Netzwerkressourcen (Streams), wie es aus dem Stand der Technik vorbekannt ist. Das Netzwerk 1 kann entsprechend als TSN-Netzwerk betrachtet werden.

An das Netzwerk 1 sind mehrere Endgeräte 3, 4 angeschlossen, von denen in der FIG 1 - wiederum beispielhaft - drei Stück dargestellt sind. Zwischen den Endgeräten 3, 4 können zur gesicherten Datenübertragung insbesondere mit garantierter Latenz TSN-Streams eingerichtet werden.

Bei dem hier beschriebenen Ausführungsbeispiel sollen zwischen den Endgeräten 3, 4 im Rahmen einer bzw. für eine Steuerungsanwendung für einen nicht weiter dargestellten industriellen technischen Prozess periodisch Datenframes in Echtzeit mit garantierter Dienstgüte, insbesondere garantierter maximaler Latenz gesendet werden. Es soll entsprechend einer oder mehrere TSN-Streams eingerichtet werden. Hierfür sind in hinlänglich vorbekannter Weise für die gesicherte Übertragung an beteiligten Netzwerkknoten 2 Netzwerkressourcen, beispielsweise Bandbreite und/oder Filter-Data-Base-Einträge und/oder Queue-Speicher, sofern sie verfügbar sind, zu reservieren. Die Einrichtung von Streams und zugehörige Reservierung insbesondere unter Nutzung eines Reservierungsprotokolls ist aus dem Stand der Technik hinlänglich vorbekannt und wird vorliegend nicht näher erläutert. Rein beispielhaft sei in diesem Zusammenhang auf die Standards IEE802.1Q, IEE802.1AS, IEE802.1BA und IEE802.1CB verweisen.

Zwei der drei Endgeräte 3 weisen jeweils nur einen Netzwerkport P auf, über den sie an das Netzwerk 1 angeschlossen sind und ein Endgerät 4 weist mehrere, konkret zwei Netzwerkports P1, P2 auf. Dieses Endgerät 4 ist in der FIG 1 durchgestrichen dargestellt, was veranschaulichen soll, dass gemäß TSN (und auch AVB) bisher Endgeräte 4 mit mehreren Ports P1, P2 nicht betrachtet werden.

Für den Fall, dass eine Anwendung 5, im Rahmen derer bzw. für die Daten von einem Endgerät 4 mit mehreren Ports P1, P2 zu senden sind, keine Informationen über den zu verwendenden Port P1, P2 hat, muss das Endgerät 4 mit einem vollwertigen internen Netzwerkknoten, insbesondere einer vollwertigen internen Bridge 6, im Netzwerk "mitspielen" und die Anwendung 5 über einen über einen internen Port 7 angeschlossen werden. Dies ist rein schematisch in FIG 2 angedeutet. Dazu sind dann alle Protokolle zu unterstützen und die interne Weiterleitung muss performant sein, da beispielweise durch das Endgerät 4 zwei Netzwerksegment verbunden werden könnten, und dann viele Daten über die interne Bridge 6 weitergeleitet werden müssten.

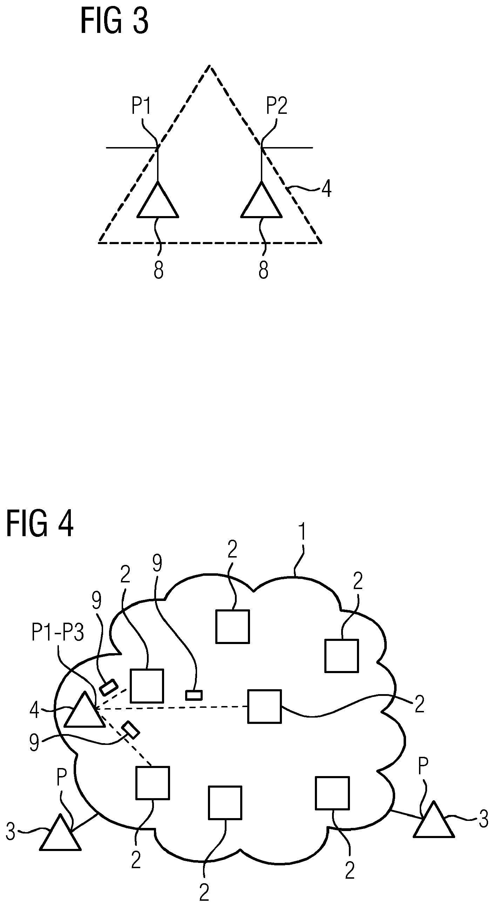

Für den Fall, dass eine Anwendung 5 gezielt einen von mehreren vorhandenen Ports P1. P2 auswählt, kann auf eine interne Bridge verzichtet werden. Für das Netzwerk 1 sieht das Endgerät 4 dann zwei getrennte Endgeräte 8 aus, was in der FIG 3 rein schematisch angedeutet ist. Die Entscheidung, welcher Port P1, P2 für eine Weiterleitung verwendet werden soll, ist dann von der Anwendung 5 zu treffen.

Eine Möglichkeit für eine besonders effiziente Kommunikation in einem Netzwerk 1, an dem wenigstens ein Endgerät 4 mit mehreren Netzwerkports P1, P2, die an verschiedenen Stellen des Netzwerkes 1 angeschlossen sind, teilnimmt, wobei das Endgerät 4 Daten an ein vorgegebenes Ziel möchte, bietet das erfindungsgemäße Verfahren zur Datenkommunikation. Vom diesem wird im Folgenden ein Ausführungsbeispiel beschrieben.

Ein entsprechendes Szenario ist rein schematisch in FIG 4 dargestellt. Man erkennt, dass das Endgerät 4 über seine mehreren Porst P1-P3 mit drei verschiedenen Netzwerkknoten 1 verbunden ist. Es sei angemerkt, dass in FIG 4 das Endgerät 4 in Abweichung von FIG 1 beispielhaft mit drei Ports P1-P3 dargestellt ist. Es versteht sich, dass das Endgerät 4 gleichermaßen nur zwei Ports P1, P2 aufweisen könnte, die beispielsweise mit zwei verschiedenen Netzwerkknoten 1 und/oder Endgeräten verbunden sind, oder auch mehr als drei Ports P1-P3, die beispielsweise mit mehr als drei verschiedenen Netzwerkknoten 1 und/oder weiteren Endgeräten verbunden sein können.

Im Folgenden wird davon ausgegangen, dass das Endgerät 4 an eines der beiden weiteren in der FIG 4 gezeigten Endgeräte 3 Daten als vorgegebenes Ziel senden möchte.

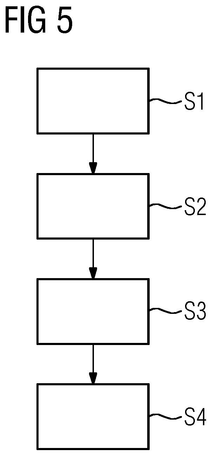

In einem ersten Schritt S1 (siehe das Blockbild gemäß FIG 5) werden dem Endgerät 4 mit den mehreren Ports P1-P2 Informationen über die Topologie des Netzwerkes 1, insbesondere über in dem Netzwerk 1 verfügbare Pfade bereitgestellt.

Im Rahmen des hier beschriebenen Ausführungsbeispiels erhält das Endgerät 4 die komplette Topologie-Information des gesamten Netzwerkes bestehend aus Netzwerkknoten 2, insbesondere von den direkt benachbarten Netzwerkknoten 2.

Den Netzwerkknoten 2 stehen die Topologie-Informationen ohnehin zur Verfügung, denn in dem Netzwerk 2 ist vorgesehen, dass diese gemäß einem Routing-Protokoll, vorliegend dem "Intermediate System to Intermediate System Protocol" gemäß ISO/IEC 10589:2002(E), welches im Folgenden kurz als IS-IS-Protokoll bezeichnet wird, Topologie-, insbesondere Nachbarschaftsinformationen austauschen. Die gemäß diesem Protokoll zwischen Netzwerkknoten 2 (im Standard als "intermediate stations" bezeichnet) ausgetauschten Topologie-Informationen dienen insbesondere in an sich bekannter Weise zur Pfadberechnung.

Um ebenfalls die Topologie-Informationen zu erhalten, gibt sich das Endgerät 4 gegenüber dem Netzwerk 1, konkret zum Austausch der Informationen gegenüber den direkt benachbarten Netzwerkknoten 2 und zum Aufbau der gesamten Netzwerktopologie allen Netzwerkknoten 2 nicht als Endgerät, sondern als Netzwerkknoten aus. Dies geschieht vorliegend, indem es wenigstens eine Nachricht sendet, die gemäß dem IS-IS-Protokoll von Netzwerkknoten 2 zu senden ist bzw. gesendet wird.

Da die benachbarten Netzwerkknoten 2 meinen, das Endgerät 4 wäre auch ein Netzwerkknoten 2, beteiligen sie dieses anschließend an dem gemäß dem IS-IS-Protokoll für Netzwerkknoten 2 vorgesehenen Topologie-Informations-Austausch. Es sei angemerkt, dass in der FIG 5 schematisch angedeutet ist, dass zwischen dem Endgerät 4 und den benachbarten Netzwerkknoten 2 IS-IS-Protokoll-Nachrichten 9 ausgetauscht werden.

Da das Endgerät 4 sich gegenüber dem Netzwerk 1 als Netzwerkknoten 2 ausgibt, erhält es sämtliche Topologie-Informationen, die gemäß dem IS-IS-Protokoll zwischen solchen auszutauschen sind.

In einem nächsten Schritt S2 trifft das Endgerät 4 bzw. die auf diesem laufende Anwendung 5, für die bzw. von der bzw. im Rahmen derer Daten an das vorgegebene Ziel als TSN-Stream zu senden sind, eine Entscheidung, welcher der Ports P1-P3 für das Senden an das vorgegebene Ziel zu verwenden ist.

Da die Topologie-Information im Endgerät 4 vorhanden ist, können die Pfade im Netzwerk 1 berechnet werden und es kann lokal der für die Datenübertragung bessere Port P1, -P3 gewählt werden. Dabei wird zweckmäßiger Weise jeweils der Port P1-P3 gewählt, über den ein optimaler, insbesondere der kürzeste Pfad zu dem oder dem jeweiligen vorgegebenen Ziel genutzt werden kann.

Bei IS-IS gibt es ferner die Möglichkeit, für Netzwerkknoten 2, etwa Bridges, eine Überlastung zu melden. Gemäß Standard werden durch einen Knoten 2, welcher eine Überlastung gemeldet hat, keine neuen Routen mehr berechnet und verteilt, da eine schleifenfreie Topologie nicht mehr gewährleistet und die Funktion neuer Routen nicht sichergestellt wäre. Von benachbarten Knoten 2 werden in einem solchen Fall nur noch Wege zu Endgeräten 3, 4 an einem überlasteten Knoten 2 eingerichtet, da die Weiterleitung an lokale Endgeräte 3, 4 immer schleifenfrei ist. Gemäß dem IS-IS-Protokoll kann der Überlastungszustand von einem Knoten 2 angezeigt werden, indem in den IS-IS-Nachrichten 9, die er sendet, ein für diesen Zweck vorgesehenes Overload-Bit bzw. Overload-Flag gesetzt ist.

Bei dem hier beschriebenen Ausführungsbeispiel gibt das Endgerät 4 mit den mehreren Ports P1-P3 gegenüber dem Netzwerk 1 zusammen mit der Info, es wäre ein Netzwerkknoten 2, an, dass es sich in einem solchen Überlastungszustand befindet. Konkret ist in den IS-IS-Protokoll-Nachrichten 9, die das Endgerät 4 an Netzwerkknoten 2 sendet, das Overload-Bit bzw. -Flag gesetzt.

Gibt ein Endgerät 4 mit mehreren Ports P1-P3 einerseits zu erkennen, dass es einen Netzwerkknoten 2 darstellt, "täuscht" dem Netzwerk 1 gegenüber also praktisch vor, ein solcher zu sein, und kommuniziert gleichzeitig bzw. "täuscht" gleichzeitig vor, dass es sich in einem Überlastungszustand befindet, wird es möglich, einerseits zwar Topologie-Informationen von Netzwerkknoten 2 zu erhalten, um jeweils lokal den besten, insbesondere kürzesten Weg im Netzwerk bestimmen und den geeigneten Port P1-P3 selbst optimiert auswählen zu können, andererseits jedoch nicht den Nachteil in Kauf nehmen zu müssen, die gleiche "Weiterleitungslast" wie Knoten 2 zu tragen, also ohne Daten im Netzwerk 1 durchleiten zu müssen (keine Bridge-Funktionalität). Mit Letzterem wird insbesondere dem Umstand Rechnung getragen, dass eine Weiterleitung zwischen den unterschiedlichen Netzwerkports P1-P3 eines Endgerätes 4 in der Regel nicht performant realisierbar ist, da die Weiteleitung in Software erfolgen muss und keine Unterstützung der Hardware vorhanden ist, wie bei zur Weiterleitung vorgesehenen und ausgebildeten Netzwerkknoten 2. Dies gilt vor allem für einfache Endgeräte.

In einem Schritt S3 wird ein Stream für die Übertragung der Daten von dem Endgerät 4 an das vorgegebene Ziel, also weitere Endgerät 3 eingerichtet, wobei der auf Basis der über das IS-IS-Protokoll erhaltenen Topologie-Informationen ausgewählte Port P1-P3 für die Stream-Einrichtung verwendet wird. Auf die Stream-Einrichtung einschließlich der Reservierung von Netzwerkressourcen an den beteiligten Netzwerkknoten 2 wird nicht näher eingegangen, da dies aus dem Stand der Technik hinlänglich vorbekannt ist.

Im Anschluss an die erfolgreiche Einrichtung des Streams werden die Daten übertragen, wobei der ausgewählte Port P1-P3 als Sendeport für den Stream verwendet wird (Schritt S4), wodurch ein optimaler, insbesondere der kürzeste Pfad für die Übertragung zu dem gegebenen Ziel genutzt wird.

Es sei angemerkt, dass das Endgerät 4 mit den mehreren Ports P1-P3 ein Ausführungsbeispiel eines erfindungsgemäßen Gerätes darstellt, welches zur Durchführung des hier beschriebenen Ausführungsbeispiels des erfindungsgemäßen Verfahrens ausgebildet und eingerichtet ist.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Beispielsweise gilt selbstverständlich, dass für den Fall, dass für mehrere und/oder im Rahmen von mehreren Anwendungen 5 Daten von einem Endgerät 4 mit mehreren Ports P1-P3 zu übertragen sind, bevorzugt für jede Anwendung 5 und die oder jede zugehörige Datenübertragung zwischen dem Endgerät 4 und dem oder dem jeweiligen vorgegebenen Ziel(en) auf Basis bereitgestellter Topologie-Informationen jeweils ein Port P1-P3 ausgewählt und für die oder die jeweilige Datenübertragung verwendet wird.

Weiterhin gilt selbstverständlich, dass, auch wenn die Abläufe vorstehend beispielhaft für ein Endgerät 4 mit mehreren Ports P1-P3 beschrieben wurden, für den Fall, dass mehrere Endgeräte 4 mit mehreren Ports P1-P3 an einem Netzwerk 1 teilnehmen, bevorzugt jedem solchen Endgerät 4 Topologie-Informationen bereitgestellt werden und jedes solche Endgerät 4 unter Berücksichtigung bzw. auf Basis dieser vor dem Senden von Daten an ein vorgegebenes Ziel (jeweils) einen geeigneten Port P1-P3 als Sendeport auswählt.

## Patentansprüche

1. Verfahren zur Datenkommunikation in einem mehrere Netzwerkknoten (2) umfassenden insbesondere industriellen Netzwerk (1), an dem wenigstens ein Endgerät (4) teilnimmt, welches wenigstens zwei Netzwerkports (P1-P3) aufweist, die an verschiedenen Stellen des Netzwerkes (1) angeschlossen sind, und wobei von dem wenigstens einen Endgerät (4) insbesondere für eine Anwendung (5) und/oder im Rahmen einer Anwendung (5) Daten an wenigstens ein vorgegebenes Ziel zu senden sind, **dadurch gekennzeichnet, dass**
- Informationen über die Topologie des Netzwerkes (1), insbesondere über in dem Netzwerk (1) verfügbare Pfade bereitgestellt werden (S1),
- auf Basis der Topologie-Informationen insbesondere von dem wenigstens einen Endgerät (4) und/oder von der Anwendung (5) eine Entscheidung getroffen wird, über welchen Netzwerkport (P1-P3) des Endgerätes (4) die Daten an das vorgegebene Ziel zu senden sind (S2), und
- die Daten über den ausgewählten Netzwerkport (P1-P3) des Endgerätes (4) gesendet werden (S4).

2. Verfahren nach Anspruch 1,
**dadurch gekennzeichnet, dass**
wenigstens einer, bevorzugt jeder Netzwerkknoten (2) insbesondere im Rahmen eines Protokolls Topologie-Nachrichten (9), die Informationen zumindest über seine jeweils direkt benachbarten Netzwerkeilnehmer, insbesondere Netzwerkknoten (2) und/oder Endgeräte (3, 4) umfassen, aussendet, und bevorzugt die ausgesendeten Topologie-Nachrichten(9) zur Bereitstellung der Topologie-Informationen oder als Topologie-Informationen herangezogen werden.

3. Verfahren nach Anspruch 2,
**dadurch gekennzeichnet, dass**
das wenigstens eine Endgerät (4) von wenigstens einem Netzwerkknoten (2) gesendete Topologie-Nachrichten (9) empfängt, und auf Basis der empfangenen Topologie-Nachrichten (9) die Entscheidung trifft, welcher Netzwerkport (P1-P3) für das Senden der Daten an das vorgegebene Ziel verwendet wird.

4. Verfahren nach einem der vorhergehenden Ansprüche, **dadurch gekennzeichnet, dass**
sich das wenigstens eine Endgerät (4) gegenüber wenigstens einem Netzwerkknoten (2) als Netzwerknoten ausgibt.

5. Verfahren nach einem der vorhergehenden Ansprüche, **dadurch gekennzeichnet, dass**
das wenigstens eine Endgerät (4) insbesondere an einen oder mehrere bevorzugt benachbarten Netzwerkknoten (2) wenigstens eine Nachricht (9), insbesondere Topologie-Nachricht sendet, die bevorzugt Informationen zumindest über seine jeweils direkt benachbarten Netzwerkeilnehmer, insbesondere Netzwerkknoten (2) und/oder Endgeräte (3) umfasst.

6. Verfahren nach einem der vorhergehenden Ansprüche, **dadurch gekennzeichnet, dass**
das wenigstens eine Endgerät (4) insbesondere einem oder mehreren bevorzugt benachbarten Netzwerkknoten (2) mitteilt, dass es sich in einem überlasteten Zustand befindet, in dem bevorzugt von dem wenigstens einen Endgerät (54) empfangene und weiterzuleitende Daten nur noch an gegebenenfalls vorhandene benachbarte Endgeräte (3) jedoch nicht an gegebenenfalls vorhandenen benachbarte Netzwerkknoten (2) weitergeleitet werden können.

7. Verfahren nach Anspruch 5 und 6,
**dadurch gekennzeichnet, dass**
in der von dem wenigstens einen Endgerät (4) gesendeten wenigstens einen Nachricht (9) das Bestehen eines Überlastungszustandes angezeigt wird, bevorzugt über ein an entsprechender Stelle gesetztes Bit.

8. Verfahren nach einem der Ansprüche 2 bis 7,
**dadurch gekennzeichnet, dass**
von den Netzwerkknoten (2) und/oder dem wenigstens einen Endgerät (4) Nachrichten (9), insbesondere Topologie-Nachrichten gemäß einem Routing-Protokoll, insbesondere gemäß dem IS-IS-Protokoll gesendet und/oder empfangen werden.

9. Verfahren nach Anspruch 8,
**dadurch gekennzeichnet, dass**
von dem wenigstens einen Endgerät (4) wenigstens eine Nachricht (9), insbesondere Topologie-Nachricht gesendet wird, die gemäß dem Protokoll von Netzwerkknoten (2) zu senden ist.

10. Verfahren nach einem der vorhergehenden Ansprüche,
**dadurch gekennzeichnet, dass**
für die von dem wenigstens einen Endgerät (4) an das wenigstens eine vorgegebene Ziel zu sendenden Daten an beteiligten Netzwerkknoten (2) zwischen dem wenigstens einen Endgerät (4) und dem wenigstens einen vorgegebenen Ziel Netzwerkressourcen reserviert und die Daten unter Nutzung der reservierten Netzwerkressourcen als Stream, insbesondere gemäß IEEE 802.1Q, weitergeleitet werden.

11. Kommunikationsgerät (4) zur Durchführung des Verfahrens nach einem der vorhergehenden Ansprüche, wobei das Gerät (4) wenigstens zwei Netzwerkports (P1-P3) umfasst und dazu ausgebildet und/oder eingerichtet ist
- um Informationen über die Topologie eines Netzwerkes (1), an dem das Gerät (4) teilnimmt, zu empfangen, insbesondere über in dem Netzwerk (1) verfügbare Pfade,
- um auf Basis der Topologie-Informationen eine Entscheidung zu treffen, welchen der wenigstens zwei Netzwerkports (P1-P3) es verwendet, um Daten an ein vorgegebenes Ziel zu senden, und
- um Daten über den ausgewählten Netzwerkport (P1-P3) zu senden.

12. Gerät (4) nach Anspruch 11,
**dadurch gekennzeichnet, dass**
das Gerät (4) ausgebildet und/oder eingerichtet ist, um sich in einem Netzwerk (1), an dem das Gerät (4) teilnimmt, als Netzwerkknoten (2) auszugeben, und/oder um Nachrichten (9) gemäß einem Routing-Protokoll, insbesondere gemäß dem IS-IS-Protokoll zu senden und/oder zu empfangen.

13. Gerät (4) nach Anspruch 11 oder 12,
**dadurch gekennzeichnet, dass**
das Gerät (4) ausgebildet und/oder eingerichtet ist, um Nachrichten (9), insbesondere Topologie-Nachrichten auszusenden, mit denen mitgeteilt wird, dass sich das Gerät (4) in einem überlasteten Zustand befindet, in dem bevorzugt von ihm empfangene und weiterzuleitende Daten nur noch an gegebenenfalls vorhandene benachbarte Endgeräte (3) jedoch nicht an gegebenenfalls vorhandenen benachbarte Netzwerkknoten (2) weitergeleitet werden können.

14. Computerprogramm umfassend Programmcode-Mittel zur Durchführung des Verfahrens nach einem der Ansprüche 1 bis 10.

15. Computerlesbares Medium, das Instruktionen umfasst, die, wenn sie auf wenigstens einem Computer ausgeführt werden, den wenigstens einen Computer veranlassen, die Schritte des Verfahrens nach einem der Ansprüche 1 bis 10 durchzuführen.
